(19) Europäisches Patentamt
European Patent Office
Office européen des brevets

(11) EP 1 083 200 A2

(12) EUROPÄISCHE PATENTANMELDUNG

(43) Veröffentlichungstag:
**14.03.2001 Patentblatt 2001/11**

(51) Int. Cl.[7]: **C08L 21/00**, C08K 5/372, C08K 5/39

(21) Anmeldenummer: **00117400.2**

(22) Anmeldetag: **25.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **07.09.1999 DE 19942620**

(71) Anmelder:
**Bayer Aktiengesellschaft**
**51368 Leverkusen (DE)**

(72) Erfinder:
- **Obrecht, Werner, Dr.**
  **47447 Moers (DE)**
- **Jeske, Winfried**
  **51399 Burscheid (DE)**

# (54) Mikrogelhaltige Kautschukmischungen mit verkappten bifunktionellen Mercaptanen und hieraus hergestellte Vulkanisate

(57) Die Erfindung betrifft Kautschukmischungen aus mindestens einem doppelbindungshaltigen Kautschuk, mindestens einem Kautschukgel und mindestens einem verkappten Bismercaptan sowie daraus hergestellte Vulkanisate und Kautschukformkörper.

Die aus den erfindungsgemäßen Kautschukmischungen hergestellten Vulkanisate weisen eine Verbesserung des Modulniveaus, eine Reduktion des DIN-Abriebs sowie eine Reduktion des heat-build-ups bei dynamischer Beanspruchung auf.

EP 1 083 200 A2

**Beschreibung**

Die Erfindung betrifft Kautschukmischungen auf der Basis mikrogelhaltiger Kautschuke und verkappter bifunktioneller Mercaptane sowie hieraus hergestellter Vulkanisate. Durch den Zusatz der verkappten bifunktionellen Mercaptane zu mikrogelhaltigen Kautschukmischungen wird eine Verbesserung des Modulniveaus, eine Reduktion des DIN-Abriebs nach Übervulkanisation sowie eine Reduktion des heat-build-ups bei dynamischer Beanspruchung (gemessen mit Goodrich-Flexometer) bei den Vulkanisaten erreicht.

Der Einsatz von Mikrogelen wird in folgenden Patentanmeldungen bzw. Patenten beschrieben: EP 405 216, DE 42 20 563, GB 1 078 400, EP 432 405 und EP 432 417. In den Patenten bzw. Anmeldungen EP 405 216, DE 4 220 563 sowie in GB 1 078 400 wird die Verwendung von CR-, BR- und NR-Mikrogelen in Mischungen mit doppelbindungshaltigen Kautschuken beschrieben. Für den technischen Einsatz ist die Verstärkungswirkung der Mikrogele (Modul) nicht ausreichend. Dies zeigt sich insbesondere daran, dass zur Einstellung technisch relevanter Modulbereiche hohe Gelmengen eingesetzt werden müssen. Durch diese hohen Gelmengen kommt es zu einer Überfüllung der Mischungen, wodurch die Reißfestigkeiten der Vulkanisate abfallen. Es bestand daher die technische Notwendigkeit, Maßnahmen zur Erhöhung des Spannungswerts niedriggefüllter gelhaltiger Kautschukvulkanisate zu finden. Außerdem bestand die technische Notwendigkeit zur Reduktion des DIN-Abriebs nach Übervulkanisation sowie zur Reduktion der Erwärmung bei dynamischer Belastung (heat-build-up).

Die Verwendung von Bismercaptanen zu Kautschukcompounds ist beschrieben in EP 432 405 und in EP 432 417. In diesen Patentveröffentlichungen wird die Verwendung von 1,2-Bis(N,N-diethylthiocarbamoyldisulfido)-ethan bei der Herstellung von Kautschukcompounds und die hieraus resultierenden vorteilhaften Eigenschaften von Vulkanisaten mit Dithioethandiyl-Brücken für Reifenseitenwände und für Reifenlaufflächen gelehrt. Nicht beschrieben und nicht gelehrt wird die Verwendung von verkappten bisfunktionellen Mercaptanen zur Modulerhöhung niedriggefüllter gelhaltiger Kautschukvulkanisate.

Es wurde jetzt gefunden, dass durch Verwendung verkappter bifunktioneller Mercaptane eine überraschend hohe Verstärkungswirkung mikrogelhaltiger Vulkanisate erreicht und hierdurch eine Reduktion des Füllgrads mit Gelen ermöglicht wird. Außerdem wird eine Reduktion des DIN-Abriebs insbesondere unter Vulkanisationsbedingungen, die eine Übervulkanisation verursachen, sowie eine Reduktion des heat-build-ups bei dynamischer Beanspruchung erreicht.

Gegenstand der vorliegenden Erfindung sind daher Kautschukmischungen aus mindestens einem doppelbindungshaltigen Kautschuk (A), mindestens einem Kautschukgel (B) und mindestens einem verkappten Bismercaptan (C), wobei der Anteil an doppelbindungshaltigem Kautschuk (A) 100 Gew.-Teile, der Anteil an Kautschukgel (B) 5 bis 150 Gew.-Teile, bevorzugt 20 bis 100 Gew.-Teile, und der Anteil an verkapptem bisfunktionellem Mercaptan (C) 0,1 bis 10 Gew.-Teile, bevorzugt 0,5 bis 7 Gew.-Teile beträgt, sowie gegebenenfalls Füllstoffen und Kautschukhilfsmitteln.

Unter doppelbindungshaltigem Kautschuk versteht man die Kautschuke, die nach DIN/ISO 1629 als als R-Kautschuke bezeichnet werden. Diese Kautschuke haben in der Hauptkette eine Doppelbindungen. Hierzu gehören z.B.:

NR: Naturkautschuk
SBR: Styrol/Butadienkautschuk
BR: Polybutadienkautschuk
NBR: Nitrilkautschuk
IIR: Butylkautschuk
HNBR: Hydrierter Nitrilkautschuk
SNBR: Styrol/Butadien/Acrylnitril-Kautschuk
CR: Polychloropren

Unter doppelbindungshaltigen Kautschuken sollen aber auch Kautschuke verstanden werden, die nach DDIN/ISO 1629 M-Kautschuke sind und neben der gesättigten Hauptkette Doppelbindungen in Seitenketten aufweisen. Hierzu gehört z.B. EPDM.

Unter Kautschukgel (B) werden Kautschukpartikel (Mikrogele) verstanden, die durch Vernetzung folgender Kautschuke erhalten werden:

BR: Polybutadien,
ABR: Butadien/AcrylsäureC1-4Alkylestercopolymere,
IR: Polyisopren,
SBR: Styrol-Butadien-Copolymerisate mit Styrolgehalten von 1-60, vorzugsweise 2-50 Gewichtsprozent,
X-SBR: carboxlylierte Styrol-Butadien-Copolymerisate
FKM: Fluorkautschuk,

ACM: Acrylatkautschuk,
NR: Naturkautschuk,
NBR: Polybutadien-Acrylnitril-Copolymerisate mit Acrylnitrilgehalten von 5-60, vorzugsweise 10-50 Gewichtsprozent,
X-NBR: carboxlierte Nitrilkautschuke
CR: Polychloropren
IIR: Isobutylen/Isopren-Copolymerisate mit Isoprengehalten von 0,5-10 Gewichtsprozent,
BIIR: bromierte Isobutylen/Isopren-Copolymerisate mit Bromgehalten von 0,1-10 Gewichtsprozent,
CIIR: chlorierte Isobutylen/Isopren-Copolymerisate mit Bromgehalten von 0,1-10 Gewichtsprozent,
HNBR: teil- und vollhydrierte Nitrilkautschuke
EPDM: Ethylen-Propylen-Dien-Copolymerisate,
EAM: Ethylen/Acrylatcopolymere,
EVM: Ethylen/Vinylacetatcopolymere
ECO: Epichlorhydrinkautschuk,
Q: Silikonkautschuke,
AU: Polyesterurethanpolymerisate,
EU: Polyetherurethanpolymerisate
ENR: Epoxydierter Naturkautschuk oder Mischungen davon

Bevorzugt ist die Vernetzung von Doppelbindungen enthaltenden Kautschuken, insbesondere: CR, NR, NBR, BR sowie SBR.

Die Mikrogele besitzen Teilchendurchmesser von 5-1000 nm, bevorzugt 20-600 nm (DVN-Wert nach DIN 53206). Aufgrund ihrer Vernetzung sind sie unlöslich und in geeigneten Quellmitteln wie z.B. Toluol quellbar. Die Quellungsindizes der Mikrogele ($Q_i$) in Toluol betragen 1-15, vorzugsweise 1-10. Der Quellungsindex wird aus dem Gewicht des lösungsmittelhaltigen Gels (nach Zentrifugation mit 20.000 Upm) und dem Gewicht des trockenen Gels berechnet:

$$Q_i = \text{Naßgewicht des Gels/Trockengewicht des Gels.}$$

Zur Ermittlung des Quellungsindex läßt man 250 mg Gel in 25 ml Toluol 24 h unter Schütteln quellen. Das Gel wird abzentrifugiert und gewogen und anschließend bei 70°C bis zur Gewichtskonstanz getrocknet und nochmals gewogen.

Die Herstellung der unvernetzten Kautschuk-Ausgangsprodukte kann durch Emulsionspolymerisation und Lösungspolymerisation erfolgen.

Außerdem können natürlich vorkommende Latices, wie Naturkautschuklatex, eingesetzt werden.

Bei der Herstellung von Mikrogelen durch Emulsionspolymerisation werden folgende radikalisch polymerisierbare Monomere eingesetzt: Butadien, Styrol, Acrylnitril, Isopren, Ester der Acryl- und Methacrylsäure, Tetrafluorethylen, Vinylidenfluorid, Hexafluorpropen, 2-Chlorbutadien, 2,3-Dichlorbutadien sowie doppelbindungshaltige Carbonsäuren, wie Acrylsäure, Methacrylsäure, Maleinsäure, Itaconsäure, doppelbindungshaltige Hydroxyverbindungen, wie Hydroxyethylmethacrylat, Hydroxyethylacrylat, Hydroxybutylmethacrylat, oder doppelbindungshaltige Epoxide, wie Glycidylmethacrylat oder Glycidylacrylat. Die Vernetzung des Kautschukgels kann direkt während der Emulsionspolymerisation durch Copolymerisation mit vernetzend wirkenden multifunktionellen Verbindungen erreicht werden. Bevorzugte multifunktionelle Comonomere sind Verbindungen mit mindestens zwei, vorzugsweise 2 bis 4 copolymerisierbaren C=C-Doppelbindungen, wie Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid, 2,4-Toluylenbis(maleimid) und/oder Triallyltrimellitat. Darüber hinaus kommen in Betracht die Acrylate und Methacrylate von mehrwertigen, vorzugsweise 2 bis 4-wertigen $C_2$ bis $C_{10}$ Alkoholen, wie Ethylenglykol, Propandiol-1,2,butandiol, Hexandiol, Polyethylenglykol mit 2 bis 20, vorzugsweise 2 bis 8 Oxyethyleneinheiten, Neopentylglykol, Bisphenol-A, Glycerin, Trimethlypropan, Pentaerythrit, Sorbit mit ungesättigten Polyestern aus aliphatischen Di- und Polyolen sowie Maleinsäure, Fumarsäure und/oder Itaconsäure.

Die Vernetzung zu Kautschukgelen während der Emulsionspolymerisation kann auch durch Fortführung der Polymerisation bis zu hohen Umsätzen oder im Monomerzulaufverfahren durch Polymerisation bei hohen internen Umsätzen erfolgen. Eine andere Möglichkeit besteht auch in der Durchführung der Emulsionspolymerisation in Abwesenheit von Reglern.

Für die Vernetzung un- bzw. schwach vernetzter Polymerer im Anschluß an die Emulsionspolymerisastion setzt man am besten die Latices ein, die bei der Emulsionspolymerisation erhalten werden. Prinzipiell kann diese Methode auch bei nichtwässrigen Polymerdispersionen angewandt werden, die auf andere Weise wie z.B. durch Umlösung zugänglich sind. Auch Naturkautschuklatices können auf diese Weise vernetzt werden.

Geeignet vernetzend wirkende Chemikalien sind beispielsweise organische Peroxide, wie Dicumylperoxid,

t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl)peroxid, t-Butylperbenzoat, sowie organische Azoverbindungen, wie Azo-bis-isobutyronitril und Azo-bis-cyclohexannitril, sowie Di- und Polymercaptoverbindungen, wie Dimercaptoethan, 1,6-Dimercaptohexan, 1,3,5-Trimercaptotriazin und Mercaptoterminierte Polysulfidkautschuke wie Mercaptoterminierte Umsetzungsprodukte von Bis-Chlorethylformal mit Natriumpolysulfid. Die optimale Temperatur zur Durchführung der Nachvernetzung ist naturgemäß von der Reaktivität des Vernetzers abhängig und kann bei Temperaturen von Raumtemperatur bis ca. 180°C gegebenenfalls unter erhöhtem Druck durchgeführt werden (siehe hierzu Houben-Weyl, Methoden der organischen Chemie, 4. Auflage, Band 14/2, Seite 848). Besonders bevorzugte Vernetzungsmittel sind Peroxide.

Die Vernetzung C=C Doppelbindungen enthaltender Kautschuke zu Mikrogelen kann auch in Dispersion bzw. Emulsion bei gleichzeitiger, partieller, oder vollständiger Hydrierung der C=C Doppelbindung durch Hydrazin wie in US 5,302,696 oder US 5,442,009 beschrieben oder gegebenenfalls mit anderen Hydrierungsmitteln, beispielsweise Organometallhydridkomplexe, erfolgen.

Auch Kautschuke, die durch Lösungspolymerisation hergestellt werden, können als Ausgangsprodukte für die Herstellung der Mikrogele dienen. In diesen Fällen geht man von den Lösungen dieser Kautschuke in geeigneten organischen Lösungen aus. Man stellt die gewünschten Größen der Mikrogele dadurch her, dass man die Kautschuklösung in einem flüssigen Medium, vorzugsweise in Wasser, gegebenenfalls unter Zugabe geeigneter oberflächenaktiver Hilfsmitteln, wie Tensiden, mittels geeigneter Aggregate mischt, so dass eine Dispersion des Kautschuks im geeigneten Teilchengrößenbereich erhalten wird. Für die Vernetzung der dispergierten Lösungskautschuke geht man wie zuvor für die nachträgliche Vernetzung von Emulsionspolymerisaten beschriebenen, vor. Als Vernetzer eignen sich die zuvor genannten Verbindungen, wobei man das für die Herstellung der Dispersion eingesetzte Lösungsmittel gegebenenfalls vor der Vernetzung z.B. destillativ entfernen kann.

Die verkappten Bismercaptane (C) leiten sich von den entsprechenden unverkappten Bismercaptanen der nachstehenden allgemeinen Formel ab:

H—S—Q—S—H.

Die Bismercaptane können in reiner Form eingesetzt werden, wobei allerdings die Scorchanfälligkeit entsprechender Mischungen zu hoch ist. Zu weniger scorchanfälligen Mischungen kommt man, indem man die Mercaptane in verkappter Form einsetzt. Die verkappten Bismercaptane haben folgende allgemeine Strukturformel:

X—Su—Q—Sv—Y,

wobei Q eine Spacergruppe bedeutet und wobei die Wasserstoffatome der unverkappten Mercaptane in geeigneter Weise durch Substituenten X und Y ersetzt sind.

Als Spacergruppe Q sind solche mit Strukturelementen auf der Basis von aliphatischen, heteroaliphatischen, aromatischen und heteroaromatischen Kohlenstoffketten (mit 1 bis 3 Heteroatomen, wie O, S, N) von besonderem Interesse, wobei die Anzahl an Kohlenstoffen in der Kette 1 bis 20, bevorzugt 1 bis 12 beträgt.

Su und Sv in der Formel sind Schwefelbrücken, wobei u und v Zahlen von 1 bis 6 bedeuten und wobei u = v = 2 bevorzugt ist.

Als Substituenten X und Y sind bevorzugt zu nennen:

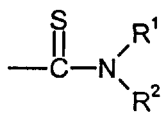
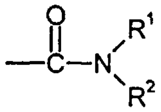
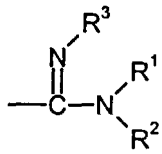

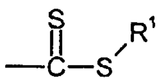
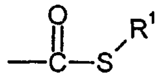
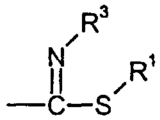

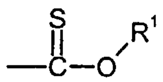
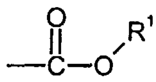
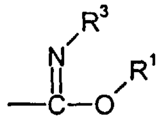

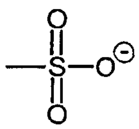
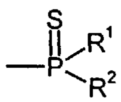

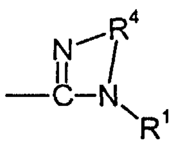
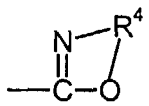 .

wobei $R^1$ bis $R^3$ für $C_1$- bis $C_{20}$-Alkyl-, Aralkyl- oder -Arylreste stehen und

$R^4$ die Bedeutung von Q besitzt.

Folgende verkappte Bismercaptane sind von Interesse:

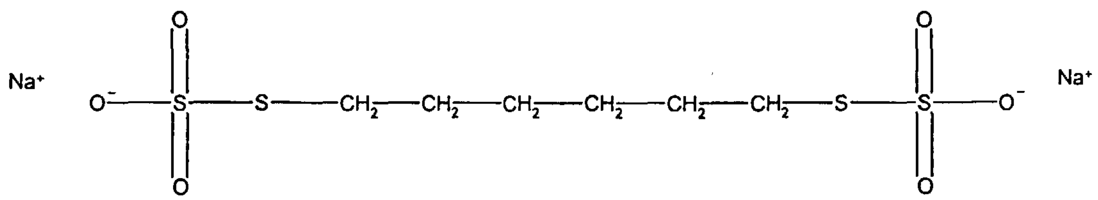

(I),

und

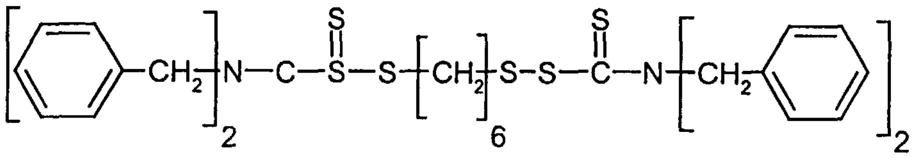

(II),

wobei Verbindung (II) von besonderem Interesse ist. Die Verbindung (II), 1,6-Bis-(N,N'-dibenzylthiocarbamoyldithio)-hexan, ist unter der Bezeichnung Vulcuren®, VP KA 9188 (Bayer AG) im Handel erhältlich.

Die erfindungsgemäßen Kautschukmischungen aus doppelbindungshaltigem Kautschuk (A), Kautschukgel (B) und verkapptem Bismercaptan (C) können zusätzliche weitere Komponenten wie Füllstoffe enthalten:

Besonders geeignete Füllstoffe zur Herstellung der erfindungsgemäßen Kautschukmischungen und -vulkanisate sind:

- Ruße. Die hierbei zu verwendenden Ruße sind nach dem Flammruß-, Furnace- oder Gasrußverfahren hergestellt und besitzen BET-Oberflächen von 20-200 $m^2/g$ wie z.B: SAF-, ISAF-, IISAF-, HAF-, FEF- oder GPF-Ruße.

- hochdisperse Kieselsäure, hergestellt z.B. durch Fällungen von Lösungen von Silikaten oder Flammhydrolyse von Siliciumhalogeniden mit spezifischen Oberflächen von 5-1000, vorzugsweise 20-400 $m^2/g$ (BET-Oberfläche) und Primärteilchengrößen von 5-400 nm. Die Kieselsäuren können gegebenenfalls auch als Mischoxide mit anderen Metalloxiden, wie Al-, Mg-, Ca-, Ba, Zn- und Ti Oxiden vorliegen.

- synthetische Silikate, wie Aluminiumsilikat, Erdalkalisilikat, wie Magnesiumsilikat oder Calciumsilikat mit BET-Oberflächen von 20-400 $m^2/g$ und Primärteilchendurchmessern von 5-400 nm.

- natürliche Silikate, wie Kaolin und andere natürlich vorkommende Kieselsäuren.

- Metalloxide, wie Zinkoxid, Calciumoxid, Magnesiumoxid, Aluminiumoxid.

- Metallcarbonate, wie Calciumcarbonat, Magnesiumcarbonat, Zinkcarbonat.

- Metallsulfate, wie Calciumsulfat, Bariumsulfat.

- Metallhydroxide, wie Aluminiumhydroxid und Magnesiumhydroxid.

- Glasfasern und Glasfaserprodukte (Latten, Stränge oder Mikroglaskugeln),

- Thermoplastfasern (Polyamid, Polyester, Aramid).

- Kautschukgele auf Basis Polychloropren und/oder Polybutadien oder auch aller anderen vorher beschriebenen Gelpartikel, die einen hohen Vernetzungsgrad besitzen mit Teilchengröße von 5-1000 nm.

Die genannten Füllstoffe können allein oder im Gemisch eingesetzt werden. In einer besonders bevorzugten Ausführung des Verfahrens werden 10-100 Gewichtsteile Kautschukgel (B), gegebenenfalls zusammen mit 0,1-100 Gewichtsteilen Ruß und/oder 0,1-100 Gewichtsteilen hellen Füllstoffen, jeweils bezogen auf 100 Gewichtsteile unvernetzten Kautschuks eingesetzt.

Die erfindungsgemäßen Kautschukmischungen können weitere Kautschukhilfsmittel enthalten, wie z.B. Vernetzer, Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide, sowie Füllstoffaktivatoren, wie beispielsweise Triethanolamin, Polyethylenglykol, Hexantriol, Bis-(triethoxisilylpropyl)-Tetrasulfid oder anderen, die der Gummiindustrie bekannt sind.

Die Kautschukhilfsmittel werden in üblichen Mengen, die sich u.a. nach dem Verwendungszweck richten, eingesetzt. Übliche Mengen sind z.B. Mengen von 0,1-50 Gewichtsprozent, bezogen auf eingesetzte Mengen an Kautschuk (A).

Als übliche Vernetzer können Schwefel, Schwefelspender, Peroxide oder Vernetzungsmittel, wie beispielsweise Diisopropenylbenzol, Divinylbenzol, Divinylether, Divinylsulfon, Diallylphthalat, Triallylcyanurat, Triallylisocyanurat, 1,2-Polybutadien, N,N'-m-Phenylenmaleimid und/oder Triallyltrimellitat verwendet werden. Darüber hinaus kommen in Betracht die Acrylate und Methacrylate von mehrwertigen, vorzugsweise 2 bis 4-wertigen $C_2$ bis $C_{10}$ Alkoholen, wie Ethylenglykol, Propandiol-1,2-butandiol, Hexandiol, Polyethylenglykol mit 2 bis 20, vorzugsweise 2 bis 8 Oxyethyleneinheiten, Neopentylglykol, Bisphenol-A, Glycerin, Trimethlypropan, Pentaerythrit, Sorbit mit ungesättigten Polyestern aus aliphatischen Di- und Polyolen sowie Maleinsäure, Fumarsäure und/oder Itaconsäure.

Die erfindungsgemäßen Kautschukmischungen können darüber hinaus Vulkanisationsbeschleuniger enthalten. Beispiele für geeignete Vulkanisationsbeschleuniger sind z.B. Mercaptobenzthiazole, -sulfenamide, Guanidine, Thiurame, Dithiocarbamate, Thioharnstoffe, Thiocarbonate sowie Dithiophosphate. Die Vulkanisationsbeschleuniger, Schwefel und Schwefelspender oder Peroxide oder weitere Vernetzungsmittel wie beispielsweise dimeres 2,4-Toluyliden-di-isocyanat (= Desmodur TT) oder 1,4-bis-1-ethoxyhydrochinon (= Vernetzer 30/10)werden in Mengen von 0,1-40 Gewichtsprozent, bevorzugt 0,1-10 Gewichtsprozent, bezogen auf die gesamte Menge an Kautschuk eingesetzt.

Die Vulkanisation der erfindungsgemäßen Kautschukmischungen kann bei Temperaturen von 100-250°C, bevorzugt 130-180°C, gegebenenfalls unter Druck von 10-200 bar erfolgen.

Die erfindungsgemäßen Kautschukmischungen aus Kautschuk (A), Kautschukgel (B) und verkapptem Bismercaptan (C) können auf verschiedene Arten hergestellt werden:

Zum einen ist es selbstverständlich möglich, die festen Einzelkomponenten zu mischen. Dafür geeignete Aggregate sind beispielsweise Walze, Innenmischer oder auch Mischextruder. Aber auch das Mischen durch Vereinigen der Latices der unvernetzten oder auch der vernetzen Kautschuke ist möglich. Isolierung der so hergestellten erfindungsgemäßen Mischung kann wie üblich, durch Eindampfen, Ausfällen oder Gefrierkoagulation (vgl. US-PS 2.187.146) erfolgen. Durch Einmischen von Füllstoffen in die Latexmischung und anschließende Aufarbeitung können die erfindungsgemäßen Mischungen direkt als Kautschuk-/Füllstoff-Formulierung erhalten werden. Die weitere Abmischung der Kautschukmischung aus doppelbindungshaltigem Kautschuk (A), Kautschukgel (B) und verkapptem Bismercaptan (C) mit zusätzlichen Füllstoffen sowie gegebenenfalls Kautschukhilfsmitteln kann in üblichen Mischaggregaten, Walzen, Innenmischer oder auch Mischextrudern, durchgeführt werden. Bevorzugte Mischtemperaturen liegen bei 50-180°C.

Die erfindungsgemäß herstellbaren Kautschukvulkanisate eignen sich zur Herstellung von Formkörpern, z.B. für die Herstellung von Kabelmänteln, Schläuchen, Treibriemen, Förderbändern, Walzenbelägen, Reifenbauteilen, insbesondere Reifenlaufflächen, Schuhsohlen, Dichtungsringen und Dämpfungselementen sowie Membranen.

## <u>Beispiele</u>

### Herstellung des SBR-Gel/NR-Masterbatches

Für die Herstellung des SBR-Gel/NR-Masterbatches stellt man zuerst den SBR-Mikrogelhaltigen Latex separat her, mischt diesen mit NR-Latex und koaguliert die Mischung der beiden Latices.

Das SBR-Gel wird ausgehend von Baystal 1357 der Polymer Latex GmbH (früher: Bayer France, Port Jérôme) durch Vernetzung mit Dicumylperoxid hergestellt. Baystal 1357 ist ein nichtcarboxylierter SBR-Latex mit einem Styrolgehalt von 22 Gew.% und einem Feststoffgehalt von 38 Gew.%. Der Gelgehalt beträgt 75 Gew.% und der Quellungsindex des vergelten Anteils beträgt 61 (Naßgewicht/ Trockengewicht in Toluol). Die Latexteilchen haben einen Durchmesser von $d_{10}$= 50 nm, $d_{50}$= 56 nm und $d_{80}$= 60 nm. Die Dichte der Latexteilchen beträgt 0,9281 g/cm$^3$. Die Glastemperatur des SBRs liegt bei -57°C.

### 1a) Vernetzung des in Latexform vorliegenden SBR-Kautschuks

Für die Vernetzung mit Dicumylperoxid (DCP) wird der Latex auf eine Feststoffkonzentration von 30 Gew.% verdünnt und in einen Autoklaven gefüllt. DCP wird in fester Form bei Raumtemperatur zugegeben (1,5 phr bezogen auf Festprodukt). Durch Aufheizen des Latex auf 60°C wird das DCP aufgeschmolzen und unter Rühren gut im Latex verteilt. Zur Entfernung von Sauerstoff wird der Reaktorinhalt bei 60°C unter Rühren evakuiert und Stickstoff aufgepresst. Der Evakuierungs/N2-Begasungszyklus wird 3 mal wiederholt. Danach wird der Reaktor auf 150°C aufgeheizt. Um Latexanbackungen beim Aufheizen zu vermeiden, wird darauf geachtet, dass die Differenz zwischen Mantel- und Innentempertur 10°C nicht übersteigt. Nach dem Aufheizen wird die Innentemperatur 45 Min. bei mindestens 150°C gehalten. Danach wird der Latex abgekühlt und über ein Monodurtuch filtriert.

Durch die Nachvernetzung mit DCP wird die Teilchengröße des Latex praktisch nicht beeinflußt; der Gelgehalt steigt auf 97,5 % und die Dichte auf 0,9717 g/cm$^3$; der Quellungsindex nimmt auf 5,4 % ab und die Glastemperatur steigt auf -26,5°C.

### 1b) Aufarbeitung des SBR-Mikrogels als NR-Masterbatch

Um eine gute Verteilung der Mikrogele in der späteren Kautschukmatrix sicherzustellen, wird der Mikrogel-Latex als NR-Masterbatch aufgearbeitet, wobei ein NR/Mikrogel-Gewichts-Verhältnis von 50/50 eingestellt wird.

Als NR-Masterbatchkomponente wird Taytex mit einer Feststoffkonzentration von 61 Gew.% (Importeur: Theodor Durrieu, Hamburg) verwendet.

Vor dem Mischen der beiden Latices wird der NR-Latex durch Zugabe von 5 Gew.% bez. auf NR an 5%iger Dresinate 731-Lösung (Natriumsalz der disproportionierten Abietinsäure der Fa. Hercules) versetzt. Danach mischt man den NR- und den carboxylierten Gellatex 10 Min. unter intensivem Rühren bei Raumtemperatur.

Nach der Herstellung der Latexmischung wird eine Alterungsschutzmitteldispersion zugegeben. Hierfür wird eine 10%ige wässrige Dispersion eines aminischen Alterungsschutmittels verwendet. Zur Stabilisierung von 1 kg Festprodukt verwendet man: 50 g einer Dispersion aus Vulkanox 4020 (N-Isopropyl-N′-phenyl-p-phenylendiamin/Bayer AG) 0,0913 g NaOH und 0,45 g Emulgator T 11 (teilhydrierte Talgfettsäure/Procter & Gamble) und 0,193 g Oulu GP 331 (unmodifizierte Harzsäure/Veitsiluto, Oulu)

Zur Koagulation wird die stabilisierte Latexmischung bei Raumtemperatur in eine Elektrolytlösung eingerührt, wobei zur Koagulation von 1 kg Festprodukt vorgelegt werden:

Elektrolytlösung aus 11 l Wasser; 150 g Kochsalz; 47 g Al-Sulfat.18 Kristallwasser; 100 g Superfloc (1%ig).

Die Kautschukkrümel werden insgesamt drei Mal bis zur Chloridfreiheit gewaschen, indem man sie abfiltriert, mit ca 15 l Lewatitwasser aufschlämmt und unter Rühren auf 95°C erhitzt. Anschließend werden die Kautschukkrümel bei 70°C im Vakuumtrockenschrank bis zur Gewichtskonstanz (ca. 60 h) getrocknet.

### 1c) Compoundherstellung , Vulkanisation und Ergebnisse

Auf der Basis o.g. NR-Masterbatches des SBR-Gels werden folgende Mischungsserien hergestellt und die Eigenschaften der entsprechenden Vulkanisate bestimmt:

**Mischungsserie A:**

Compound mit 75 phr SBR-Gel. Es wird gezeigt, dass durch Zusätze von 1,6-Bis(N,N'-Dibenzylthiocarbamoyldithio)-hexan das Modulniveau der gelhaltigen Compounds signifikant erhöht wird.

**Mischungsserie B:**

Es wird gezeigt, dass bei einem Compound mit 60 phr SBR-Gel durch Kombination von 1,6-Bis(N,N'-Dibenzylthiocarbamoyldithio)-hexan mit Bis(triethoxy-propyl-silyl-disulfan) eine weitere Anhebung des Modulniveaus möglich ist.

Durch eine erhebliche Verlängerung der Vulkanisationszeit (160°C/2h) gelingt eine signifikante Reduktion des DIN-Abriebs.

**Mischungsserie C:**

Es wird gezeigt, dass durch Zusätze von 1,6-Bis(N,N'-Dibenzylthiocarbamoyldithio)-hexan und von Bis(triethoxy-propyl-silyl-disulfan) auch bei Gelgehalten von 50 und von 40 ph $M_{300}$-Werte >10 Mpa erzielt werden und dass diese Zusätze einen positiven Einfluß insbesondere auf den heat-build-up im Goodrich-Flexometertest haben.

In einem Laborinnenmischer werden gemäß nachfolgender Rezeptur unterschiedliche Compounds (Angabe in phr) auf der Basis des SBR/NR-Masterbatches hergestellt.

Die Mischungskomponenten werden in der in der Tabelle angegebenen Reihenfolge gemischt:

**Mischungsserie A:**

| Mischungs-Nr.: | 1 | 2 | 3 | 4 | 5 |
|---|---|---|---|---|---|
| Naturkautschuk, vormastiziert* | 25 | 25 | 25 | 25 | 25 |
| NR-Materbatch mit 50 Gew.% SBR-Mikrogel | 150 | 150 | 150 | 150 | 150 |
| Ozonschutzwachs** | 1 | 1 | 1 | 1 | 1 |
| Stearinsäure | 3 | 3 | 3 | 3 | 3 |
| Zinkoxid | 3 | 3 | 3 | 3 | 3 |
| IPPD*** | 1 | 1 | 1 | 1 | 1 |
| TMQ**** | 1 | 1 | 1 | 1 | 1 |
| Schwefel | 1,6 | 1,6 | 1,6 | 1,6 | 1 |
| TBBS***** | 1 | 2 | 1 | 1 | 1 |
| Vernetzer II****** | 0 | 0 | 1 | 2 | 2 |

* = TSR 5, Defo 700
** = Antilux® 654 der Rheinchemie Rheinau GmbH
*** = Vulkanox® 4010 NA der Bayer AG
**** = Vulkanox® HS der Bayer AG
***** = Vulkacit® NZ der Bayer AG
****** = Versuchsprodukt KA 9188 der Bayer AG (Vulcuren®)

Die Vulkansiationsgeschwindigkeiten der Mischungen werden in einem Rheometerexperiment bei 160°C untersucht Auf diese Weise werden charakteristische Heizzeiten wie z.B. $t_{95}$ bestimmt. Für die Herstellung der Vulkanisate wird als Vulkanisationszeit $t_{95\ +5}$ gewählt:

| Mischungs-Nr.: | 1 | 2 | 3 | 4 | 5 |
|---|---|---|---|---|---|
| Vulkanisationszeit [min] | 14,6 | 15,2 | 15,4 | 15,7 | 15,8 |

Auf der Basis o.g. Compounds werden folgende Prüfergebnisse erhalten:

| Mischungs-Nr.: | 1 | 2 | 3 | 4 | 5 |
|---|---|---|---|---|---|
| Zugfestigkeit [MPa] | 21,3 | 24 | 21 | 16 | 18 |
| Bruchdehnung [%] | 540 | 568 | 413 | 328 | 335 |
| Spannungswert bei 100 % Dehnung [MPa] | 1,6 | 1,6 | 2,2 | 2,7 | 2,6 |
| Spannungswert bei 300 % Dehnung [MPa] | 7,2 | 7,4 | 11,4 | 14,8 | 14,7 |
| Härte Shore A, 23°C | 58 | 59 | 64 | 66 | 66 |
| Härte Shore A, 70°C | 50 | 53 | 58 | 60 | 60 |
| Rückprallelastizität, 23°C [%] | 37 | 38 | 38 | 39 | 39 |
| Rückprallelastizität, 70°C [%] | 59 | 61 | 65 | 67 | 66 |
| Abrieb 40er Schmirgel [$mm^3$] | 196 | 244 | 270 | 322 | 273 |

(fortgesetzt)

| Mischungs-Nr.: | 1 | 2 | 3 | 4 | 5 |
|---|---|---|---|---|---|
| Abrieb 60er Schmirgel [$mm^3$] | 132 | 137 | 212 | 148 | 149 |

**Mischungsserie B:**

| Mischungs-Nr.: | 1 | 2 | 3 |
|---|---|---|---|
| TSR 5, Defo 700 | 40 | 40 | 40 |
| NR-Materbatch mit 50 Gew.% SBR-Mikrogel | 120 | 120 | 120 |
| Antilux® 654 | 1,5 | 1,5 | 1,5 |
| Stearinsäure | 3,0 | 3,0 | 3,0 |
| Zinkoxid | 3,0 | 3,0 | 3,0 |
| Vulkanox® 4010 NA | 1,0 | 1,0 | 1,0 |
| Vulkanox® HS | 1,0 | 1,0 | 1,0 |
| Si 69® | 0 | 0 | 6 |
| Schwefel | 1,6 | 1,6 | 1,6 |
| Vulkacit NZ | 1 | 1 | 1 |
| KA 9188 | 0 | 2 | 2 |

Si 69® = Bis(tri-ethoxy-silyl-propyl-disulfan)/Degussa

Die Vulkansiationsgeschwindigkeiten der Mischungen werden in einem Rheometerexperiment bei 160°C untersucht Auf diese Weise werden charakteristische Heizzeiten wie z.B. $t_{95}$ bestimmt. Für die Herstellung der Vulkanisate wird als Vulkanisationszeit $t_{95\ +5}$ gewählt:

| Mischungs-Nr.: | 1 | 2 | 3 |
|---|---|---|---|
| Vulkanisationszeit [min] | 16,5 | 15,6 | 16,0 |

Auf der Basis o.g. Compounds werden folgende Prüfergebnisse erhalten:

| Mischungs-Nr.: | 1 | 2 | 3 |
|---|---|---|---|
| Zugfestigkeit [MPa] | 25,4 | 21,3 | 14,3 |
| Bruchdehnung [%] | 627 | 403 | 267 |
| Spannungswert bei 100 % Dehnung [MPa] | 1,5 | 2,5 | 3,6 |
| Spannungswert bei 300 % Dehnung [MPa] | 6,1 | 12,6 | - |
| Härte Shore A, 23°C | 57,9 | 64,1 | 68 |
| Härte Shore A, 70°C | 51,4 | 58,5 | 63 |
| Rückprallelastizität, 23°C [%] | 40,8 | 41,3 | 48 |
| Rückprallelastizität, 70°C [%] | 63 | 68 | 73 |

(fortgesetzt)

| Mischungs-Nr.: | 1 | 2 | 3 |
|---|---|---|---|
| Abrieb 40er Schmirgel [$mm^3$] | 197 | 321 | 324 |
| Abrieb 60er Schmirgel [$mm^3$] | 121 | 163 | 126 |

Nach einer Vulkanisationszeit von 2 h bei 160°C (Übervulkanisation) werden folgende Prüfergebnisse erhalten:

| Mischungs-Nr.: | 1 | 2 | 3 |
|---|---|---|---|
| Zugfestigkeit [MPa] | 21,8 | 18,7 | 14,6 |
| Bruchdehnung [%] | 632 | 400 | 292 |
| Spannungswert bei 100 % Dehnung [MPa] | 1,6 | 2,3 | 3,2 |
| Spannungswert bei 300 % Dehnung [MPa] | 5,4 | 10,7 | - |
| Härte Shore A, 23°C | 57 | 62,5 | 64,2 |
| Härte Shore A, 70°C | 50 | 57,8 | 61,7 |
| Rückprallelastizität, 23°C [%] | 37 | 42 | 49,3 |
| Rückprallelastizität, 70°C [%] | 50 | 68 | 71 |
| Abrieb 40er Schmirgel [$mm^3$] | 167 | 190 | 148 |
| Abrieb 60er Schmirgel [$mm^3$] | 136 | 95 | 65 |

**Mischungsserie C:**

| Mischungs-Nr.: | 1 | 2 | 3 | 4 |
|---|---|---|---|---|
| TSR 5, Defo 700 | 50 | 50 | 60 | 60 |
| NR-Materbatch mit 50 Gew.% SBR-Mikrogel | 100 | 100 | 80 | 80 |
| Antilux® 654 | 1,5 | 1,5 | 1,5 | 1,5 |
| Stearinsäure | 3,0 | 3,0 | 3,0 | 3,0 |
| Zinkoxid | 3,0 | 3,0 | 3,0 | 3,0 |
| Vulkanox® 4010 NA | 1,0 | 1,0 | 1,0 | 1,0 |
| Vulkanox® HS | 1,0 | 1,0 | 1,0 | 1,0 |
| Si 69 | 0 | 3 | 0 | 0 |
| Schwefel | 1,6 | 1 | 1,6 | 1 |
| Vulkacit® NZ | 1 | 1 | 1 | 1 |
| KA 9188 | 0 | 2 | 0 | 2 |

Die Vulkansiationsgeschwindigkeiten der Mischungen werden in einem Rheometerexperiment bei 160°C untersucht Auf diese Weise werden charakteristische Heizzeiten wie z.B. $t_{95}$ bestimmt. Für die Herstellung der Vulkanisate wird als Vulkanisationszeit $t_{95+5}$ gewählt:

| Mischungs-Nr.: | 1 | 2 | 3 | 4 |
|---|---|---|---|---|
| Vulkanisationszeit [min] | 15,2 | 19,8 | 19,6 | 20,2 |

Auf der Basis o.g. Compounds werden folgende Prüfergebnisse erhalten:

| Mischungs-Nr.: | 1 | 2 | 3 | 4 |
|---|---|---|---|---|
| Zugfestigkeit [MPa] | 27,9 | 19,7 | 28 | 25,2 |
| Bruchdehnung [%] | 696 | 366 | 693 | 426 |
| Spannungswert bei 100 % Dehnung [MPa] | 1,4 | 2,9 | 1,3 | 2,6 |
| Spannungswert bei 300 % Dehnung [MPa] | 5,4 | 13,1 | 4,7 | 12,3 |
| Härte Shore A, 23°C | 55 | 63 | 54 | 62 |
| Härte Shore A, 70°C | 50 | 49 | 49 | 58 |
| Rückprallelastizität, 23°C [%] | 44 | 48 | 49 | 58 |
| Rückprallelastizität, 70°C [%] | 64 | 71 | 66 | 74 |
| Abrieb 40er Schmirgel [$mm^3$] | 171 | 227 | 171 | 220 |
| Abrieb 60er Schmirgel [$mm^3$] | 122 | 127 | 130 | 141 |

Im Goodrich-Flexometertest werden mit o. g. Vulkanisaten folgende Werte erhalten:

| Prüfung bei 100°C/25 Min. | 1 | 2 | 3 | 4 |
|---|---|---|---|---|
| Temperatur am Probenhalter nach 25 Min.[°C] | 108,3 | 105,7 | 107,2 | 104,9 |
| Fließen bei Prüfung | 0,5 | -0,5 | 0,3 | 0 |
| Bleibende Verformung nach Prüfung [%] | 2,4 | 0,8 | 1,6 | 0,8 |
| Innentemperatur des Prüfkörpers nach 25 Min. [°C] | 120,1 | 114,1 | 115,7 | 111,9 |

**Patentansprüche**

**1.** Kautschukmischungen aus mindestens einem doppelbindungshaltigen Kautschuk (A), mindestens einem Kautschukgel (B) und mindestens einem verkappten Bismercaptan (C), wobei der Anteil an doppelbindungshaltigem Kautschuk (A) 100 Gew.-Teile, der Anteil an Kautschukgel (B) 5 bis 150 Gew.-Teile und der Anteil an verkapptem bisfunktionellem Mercaptan (C) 0,1-10 Gew.-Teile beträgt, sowie gegebenenfalls Füllstoffen und Kautschukhilfsmitteln.

**2.** Mischungen nach Anspruch 1, dadurch gekennzeichnet, dass die Kautschukgele (B) basieren auf doppelbindunghaltigen Kautschuken.

**3.** Mischungen nach Anspruch 1, dadurch gekennzeichnet, dass das verkappte Bismercaptan (C) 1,6-Bis(N,N'-dibenzylthiocarbamoyldithio)-hexan ist.

**4.** Verwendung der Kautschukmischungen nach Anspruch 1 zur Herstellung von Kautschukvulkanisaten, die zur Herstellung der verschiedensten Kautschukformkörpern dienen.